# EUROPEAN PATENT SPECIFICATION

(11) **EP 2 244 932 B1**
(45) Date of publication and mention of the grant of the patent: **10.12.2014**
(21) Application number: 08868923.7
(22) Date of filing: 15.10.2008
(51) Int. Cl.: B62K 11/10

(54) **SEMI-MONOCOQUE FRAME STRUCTURE FOR A TWO WHEELER VEHICLE**
HALBSCHALENRAHMENSTRUKTUR FUER EIN ZWEIRADFAHRZEUG
STRUCTURE DE CHÂSSIS SEMI-MONOCOQUE POUR UN VÉHICULE A DEUX ROUES

(30) Priority: 03.01.2008 IN DE00232008
(43) Date of publication of application: 03.11.2010
(73) Proprietor: LML Limited, Kanpur 208022 (IN)
(72) Inventor: KUMAR, Dinesh, Kampur 208022 (IN)
(74) Representative: Petraz, Gilberto Luigi
(86) International application number: PCT/IN2008/000672
(87) International publication number: WO 2009/084022

(56) References cited:
- EP-A- 1 772 362
- CH-A- 332 032
- GB-A- 2 111 005
- US-A1- 2005 092 535

## Description

### FIELD OF THE INVENTION

The present invention relates to a tubular frame structure for a scooter type vehicle. More particularly, it relates to a semi-monocoque structure for fitment of two stroke as well as four stroke engine. The construction also facilitates use of LPG or CNG tank and 2 or 3 stage gas pressure reducer within the existing shell with minimum insignificant changes.

### BACKGROUND OF THE INVENTION:

Motor Scooter frame/body fall in two categories: (1) Frame structure and (2) monocoque structure. The Frame Structure is made using tubular sections, channels, gussets etc. welded together and a shape defining a plastic or metal body bolted to it, which is known as monocoque structure frame. The Tubular Frame Structure shall be covered with Sheet Metal / Plastic Panels. It makes the structure heavier compared to a monocoque structure.

In case of a monocoque structure, body and load bearing frame are unitized i.e. they forms a single unit.

The monocoque construction, when used with a four stroke engine which is generally bigger then a two stroke engine, increases in width which necessitates a wider body thus reducing the driving comfort and also the handling.

The monocoque structure also limits the size of a LPG or CNG cylinder. Limited cylinder size particularly for CNG does not provide a practical / economic driving range per gas filling due to low CNG energy density.

### PRIOR ART:

United States Patent 5890783 teaches a Semi-monocoque apparatus and method for an electronic device enclosure. The enclosure includes channel-shaped members that each has a convex side and a concave side. The enclosure further includes a substantially planar outer surface and an attachment device for attaching the substantially planar outer shell to the concave side of the channel-shaped member such that a rigid, enclosed, substantially tubular structural member is formed, thereby forming a rigid chassis.

US patent 5,058,756 teaches a semi-monocoque or stressed skin cargo vehicle that uses plates interconnected and reinforced by flanged side posts, and the plates are sandwiched between top and bottom rails and the posts, the flanges being of substantially the same thickness as the plates.

United States Patent 7,118,168 teaches a chassis for a motor vehicle that comprises two lateral longitudinal members. The following elements extend between these members and are affixed to them: the front and rear floor parts; a cross member known as the heel board cross member having upper and lower longitudinal sides which are fixed to the front and rear floor parts, respectively; and a cross member, having a length approximately equal to that of the heel board cross member, which extends underneath the lower longitudinal side of the heel board cross member and is affixed to it. Each of the ends of the cross member is fixed to one of the lateral longitudinal members. The invention also relates to station wagon-type motor vehicle having such a chassis.

The closest prior art document US2005/0092535 comprises a vehicle frame including a front fork which is pivoted on a head pipe and can be steered by operating a handle, a downpipe running rearwards and downwards from the head pipe, a middle frame extending substantially horizontally from a lower end of the downpipe and a rear frame running rearwards and upwards from a rear end of the middle frame wherein an outer periphery of the vehicle frame is covered by a vehicle cover.

### OBJECT OF THE INVENTION:

The main object of the invention is to provide an alternative semi-monocoque structure for a two wheeler vehicle, which ensures an easy installation of a CNG/LPG cylinder.

Another object of the invention is to facilitates use of LPG and CNG tank and 2 or 3 stage gas pressure reducer within the existing shell with minimum insignificant changes.

Still another object of the invention is to facilitates fitment of 2 or 4 stroke engine having geared or variator transmission and located centrally to the body longitudinal plane or offset substantially, maintaining the feature of accommodating the spare wheel inside the body cowl.

Still another object of the invention is to maintain the same outer shape and size of an existing two stroke engine scooter (NV) which is very comfortable to seat and drive and does not cause fatigue in long distance driving also. It also reduces the investment in a new die set.

Still another object of the invention is to provide the same construction with minor adaptation for many options of engines for example, substantially offset engine, central engine, variator transmission or geared transmission engine working on two stroke / four stroke principle. It also facilitates fitment of large size (6-8 liters) CNG/LPG Cylinders.

Still another object of the invention is to provide two types of rear end termed as "Y" shape frame and parallel tube frame. Both the frames can accommodate substantially offset engine, central engine, variator transmission or geared transmission engine working on two stroke / four stroke principle and fuels as varied as gasoline, LPG or CNG.

### SUMMARY OF THE INVENTION:

In accordance with the present invention there is provided a semi-monocoque structure for a two wheeler vehicle, as set out in claim 1.

Preferred embodiments of the present invention are laid down in the appended dependent claims.

### DESCRIPTION OF THE INVENTION:

A more complete appreciation of the invention and the related advantages thereof will be more clearly understood by reference to the following accompanying drawings which are for illustrative purpose, hence the same should not be construed to restrict the scope of the invention.
Fig 1 illustrates a monocoque frame structure.
Fig 2 illustrates a semi-monocoque frame structure including "Y" shaped rear end and parts thereof according to the present invention.
Fig 3 illustrates a semi-monocoque frame structure including parallel tube frame and parts thereof according to the present invention.
Fig. 4 illustrates a shell including cowls according to the present invention.
Fig. 5 illustrates a complete vehicle with semi-monocoque structure according to the present invention.

### DESCRIPTION OF THE INVENTION:

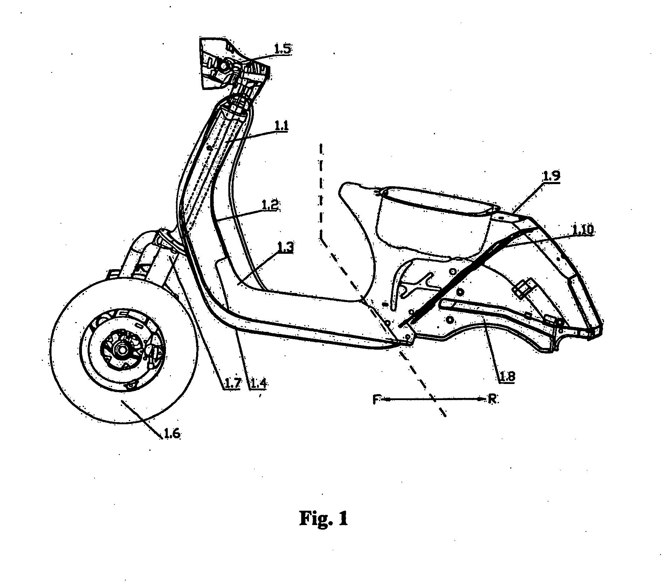

According to the invention, a monocoque structure of a two wheeler vehicle as shown in Fig. 1 is: Front end (F) of the monocoque structure consists of four major parts: a steering tube (1.1), an upper chassis (1.2), a lower chassis (1.3) and a wind shield (1.4) forming a shape giving wind protection and foot board. Major parts of Rear end (R) are: a shell LH (1.8), a shell RH (1.9), and a diaphragm (1.10). All these parts are welded together as a unitized structure giving it a body shape and provides anchorage to an engine and to a rear wheel and to a front steering mechanism comprising a handle bar (1.5), a front wheel (1.6) and a front shock-absorber (1.7). A Rear shock absorber is mounted between the engine and the rear end of the structure. Fuel / oil tanks are housed in the rear end (R).

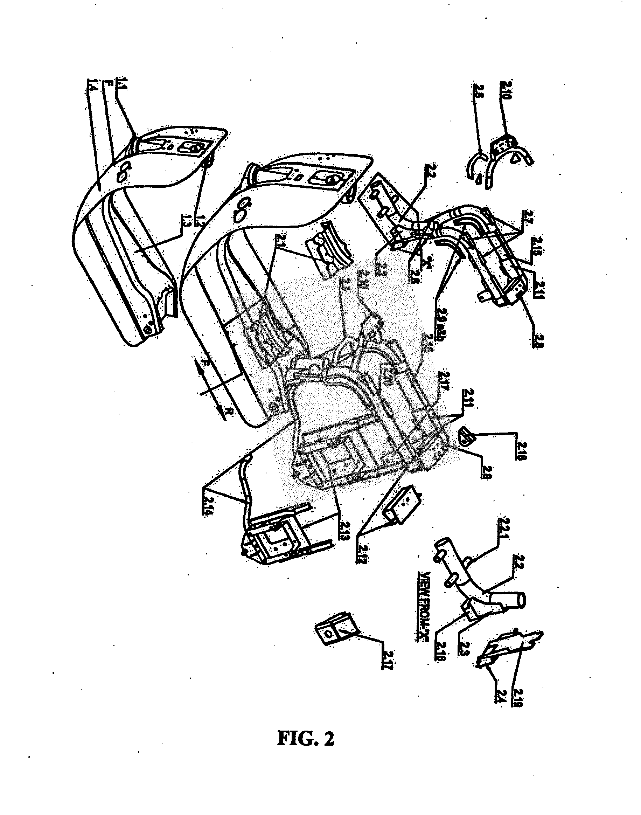

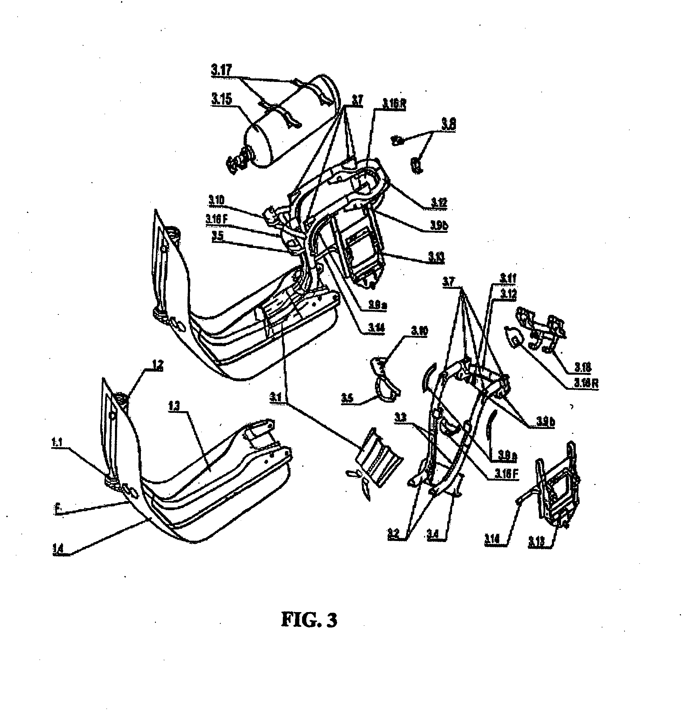

According to the invention as shown in Fig. 2 and Fig 3, a Drive away portion consist of the Front End (F) and the Rear End (R), where the Front End is basically of sheet metal construction and the Rear End is mostly of tubular construction.

As shown in Fig 2, the Front end (F) of the Semi-monocoque structure consists of four major parts: the steering tube (1.1), the upper chassis (1.2), the lower chassis (1.3) and the wind shield (1.4) forming a shape giving wind protection and foot board. It is made primarily of sheet metal, formed in the shape of channels and beams. It is so designed to act as structural part and provides beaming and torsional strength to drive away. Front end is a means for providing anchoring points for the engine (the Rear Wheel is directly mounted on the output shaft of the engine).

### The Front end has also the following functions:

- It protects the driver from front impact i.e. acts as leg guard
- It protects from wind and mud
- It acts as a platform for foot rest
- It houses the steering and handle bar axle (with head light, electrical controls and brake controls, front shock absorber and wheel)
- It provides a platform for accessories like stand, glove box etc.
- It houses front blinkers.
- The sheet metal structure has been aesthetically designed to define the vehicle shape.

As shown in fig 2 and fig 3, Rear end (R) is built around a tubular construction. According to the present invention, two types of tubular structure have been designed and are termed as: 1. "Y" shape structure (Fig.2) and 2. Parallel tube structure (Fig.3).

According to the invention the main difference between the two structures is that in "Y" shape structure (fig 2) a single tube (2.2) is interfaced to the front end (F) and later branches out to two parallel tubes (2.20). In the parallel tube structure (fig 3), from the beginning two tubes (3.2) are interfaced with the front end and run parallel each other.

### "Y" Shaped Frame (Fig.2):

According to the present invention the Interface Bracket (2.1) designed for a Single Tube is welded across and inside the Lower Chassis (1.3) of the Front End. Interface bracket (2.1) is a means for interfacing to the front end (F) and the rear end (R) of the semi-monocoque structure frame.

According to the present invention as shown in fig 2, a Central Single Tube (2.2) along with three Cross Tubes (2.2.1) are welded to the Interface Bracket (2.1). The cross tubes (2.2.1) are means for providing torsional rigidity to the central single tube (2.2). One channel (2.3) is welded to a bent portion of the Central Tube (2.2). A channel (2.3) is a means for providing an extra support to the single tube (2.2) to avoid the deformation and for providing rigidity to the tubular structure in combination with a cross plate (2.4) and a support plate (2.19). The Cross Plate (2.4) and the Support Plate (2.19) are welded to the Channel (2.3), across to the Lower Chassis (1.3) and to the Wind Shield (1.4). The Cross Plate (2.4), along with the Support Plate (2.19), has the function to resist to the torsional force and to distribute the stress to the Lower Chassis (1.3), the Upper Chassis (1.2) and the Wind Shield (1.4). One Cross Tube (2.5) is welded to the branched Parallel Tubes (2.20) to avoid the deformation across bending/winding of the parallel tubes (2.20). Two Channel gussets (2.6) are welded to the channel (2.3) and to the branched Parallel Tubes (2.20) to provide extra support and firmness to the tubular portion of the semi-monocoque structure. A Rectangular Steel section (2.16) is welded to the channel (2.3), the Cross Plate (2.4) and the Support Plate (2.19). This section provides further strength against bending and also acts as a stopper for the engine mounting link.

According to the present invention, in 'Y' Frame construction, the Central Tube (2.2) branches out to two Parallel Tubes (2.20). The parallel tubes are reinforced with six Channels (2.7, 2.11 & 2.15) of different shape and size to increase the bending strength.

As shown in fig 2, the two parallel tubes (2.20) are further strengthen by a Bridge Bracket (2.8) which also provides support for mounting of a shell (4.1, 4.2).

According to the invention every bend is provided with welded gussets (2.9a, 2.9b) to provide strength against bending.

A Front tubular seating structure (2.10) is a split design to clear the cowl opening mechanism Actuator Rod and also works as a gusset between two tubes. It also provides anchorage points for the shell and the seat (2.10).

According to the present invention brackets (2.11) for the shock absorber are designed to bear the reactive load of the shock absorber without bending or deforming. A bracket (2.18) is welded to the bracket (2.11) to facilitate Shock Absorber mounting. In no load vehicle condition, Shock Absorber angle is 2 to 2.5° from vertical plane towards front in case of CNG / LPG vehicle, and 9.2 to 9.5° in case of gasoline vehicle.

The rear portion of the parallel tubes (2.20), as shown in fig 2, is welded to a rigid cross structure (2.12) to make a composite structure. A spare wheel mounting structure (2.13) is on the left side and is welded on the top to the brackets on the tube and also further strengthened against twisting by joining it to the Front End (F) using a tube (2.14). the central portion of the spare wheel structure (2.13) is used to house a battery, engine electronics and a pressure reducer in case of gaseous fuels.

### Parallel Tube Frame (Fig.3):

According to the present invention as shown in fig 3, an Interface Bracket (3.1) designed for Double Parallel Tubes (3.2) is welded across and inside the Lower Chassis (1.3) of the Front End (F). Interface bracket (3.1) is a means for interfacing to the front end (F) and the rear end (R) of the semi-monocoque structure frame. A pair of Parallel Tubes (3.2) is welded to the Interface Bracket (3.1). Two channels (3.3) are welded to the bent portion of the Parallel Tubes (3.2) to provide torsional rigidity to the parallel tubes (3.2). A Cross Plate (3.4) is welded to the channel section (3.3), across to the Lower Chassis (1.3) and to the Wind Shield (1.4) to provide extra support and rigidity to the parallel tubes (3.2). One Cross Tube (3.5) is welded to Parallel Tubes (3.2) to avoid the deformation across bending/winding of the parallel tubes (3.2).

According to the invention, in the parallel tube frame structure, the parallel tubes (3.2) are covered with brackets (3.7) to increase the bending strength.

As shown in fig 3, For the Parallel Tube construction two Brackets (3.8) provide anchoring for Seat Flocking and Shell mounting. Every bend of the structure has welded gussets (3.9a, 3.9b) to provide strength against bending.

According to the invention, the front tubular seating structure (3.10) has a split design to clear the cowl opening mechanism Actuator Rod and also works as a gusset between two tubes. It also provides anchorage points for shell and seat (3.10). As shown in fig 3, brackets (3.11) for the shock absorber have been so designed to bear the reactive load of the shock absorber without bending or deforming. In no load vehicle condition Shock Absorber angle is 2 to 2.5° from vertical plane towards front in case of CNG / LPG vehicle and 9.2 to 9.5° in case of gasoline vehicle.

The rear portion of the Parallel Tubes is welded with a U Tube (3.12) to make a composite structure. It also provides a buffer against rear impact. A spare wheel mounting structure (3.13) is on the left side and is welded on the top to the brackets on the tube and also further strengthened against twisting by joining it to the Front End using a tube (3.14). As shown in fig 3, the central portion of the spare wheel structure (3.13) is used to house a battery, engine electronics and a pressure reducer in case of gaseous fuels.

CNG / LPG cylinder (3.15) is supported over two cups (3.16F, 3.16R) and rigidly held to its position by two bolted Rubber Cushioned Steel Straps (3.17).

According to the present invention, the front cup (3.16F) for the CNG / LPG cylinder is supported on the Parallel Tubes (3.2) and also rests on a Front Tube (3.5) which joins the Parallel Tubes (3.2). The rear support cup (3.16R) for CNG /LPG cylinder (3.15) is supported over the Rear Parallel Tubes (3.18) which are welded to the U tube. The spacing between the two Rear Parallel Tubes (3.18) is such (85-100 mm) that it does not interfere with the wheel when in full bump condition. The total CNG/LPG cylinder (3.15) support system including Front Cup (3.16F) and Rear Cup (3.16R) is so designed to take the downward load and shear loads even on bump conditions and emergency braking condition.

According to the present invention, the CNG/LPG Cylinder mounting is shown in Fig.3 (Parallel Tube Structure) only, similar arrangement can be made for 'Y' shape frame structure also (Fig.2).

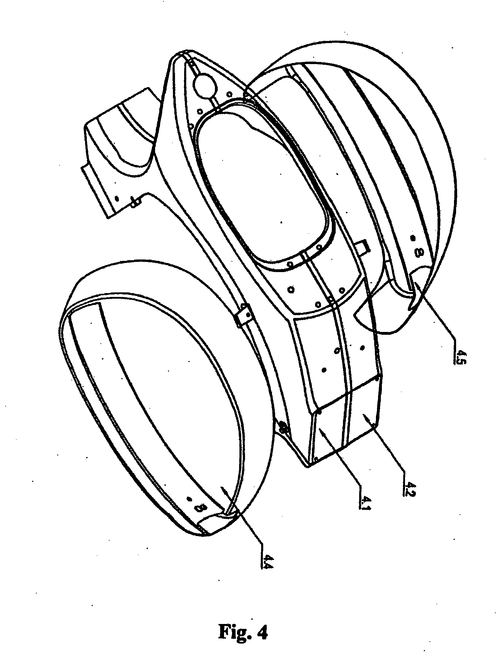

According to the invention as shown in fig 4, the Shell made up of pressed steel Shell Panel LH (4.1) and RH (4.2) welded together, provide shape and style to the vehicle and provide support for a seat, a fuel tank and two lockable cowls LH (4.4) and RH (4.5), covering an engine spare wheel, a fuel tank, a battery etc.

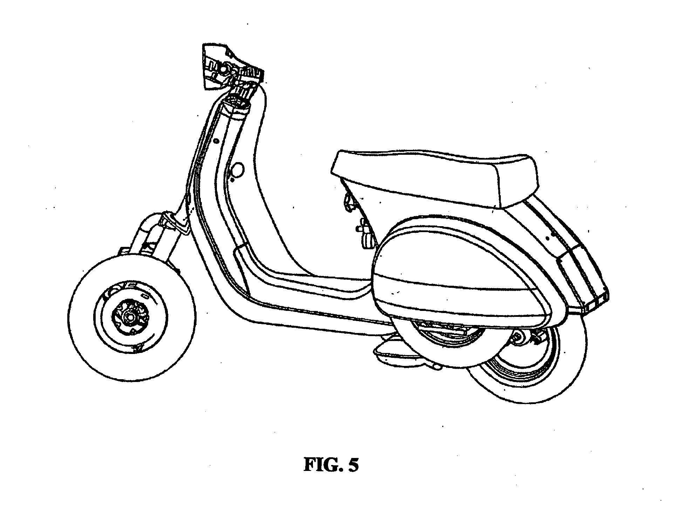

A complete vehicle with the Semi Monococque Structure is shown in Fig.5.

While particular embodiments of the present invention have been illustrated and described, it would be obvious to those skilled in art that various other changes and modifications can be made without departing from the scope of the invention as defined in the appended claims .

## Claims

1. A semi-monocoque structure for a two wheeler vehicle, comprising a load bearing drive away assembly, a shell assembly (4.1, 4.2) for providing support for a driver and a pillion seating, matching with the drive away assembly maintaining the continuity of the vehicle aesthetic, a pair of sheet metal lockable cowls (4.4, 4.5) providing cover and safety for an engine and other parts, wherein the drive away assembly comprises a two part assembly having at its front end (F) a sheet metal construction and at its rear end (R) a tubular structure (2.10, 3.10) of a split joint to clear a cowl opening mechanism actuator rod and also to work as a gusset, said tubular structure (2.10, 3.10) is either "Y" shaped or has a parallel tubular frame structure, and said tubular structure (2.10, 3.10) is provided with holding means (3.16F, 3.16R) at its front end and at its rear end for holding a CNG/LPG cylinder (3.15), having a dimension in conformity with the dimensions shape and configuration of the CNG/LPG cylinder (3.15), and has clamping means (3.17) for clamping the CNG/LPG cylinder (3.15) rigidly.

2. The semi-monocoque structure as claimed in claim 1, wherein the front end (F) of the drive away assembly comprises four major parts: a steering tube (1.1), an upper chassis (1.2), a lower chassis (1.3) and a wind shield (1.4).

3. The semi-monocoque structure as claimed in claim 2, wherein the front end (F) of the drive away assembly is primarily made of sheet metal, formed in the shape of channel and beam design, and is a structural part for providing beaming and torsional strength to act as a means for providing anchor points for the engine.

4. The semi-monocoque structure as claimed in claim 2, wherein the front end (F) of the drive away assembly acts as leg guard and protector from wind and mud, acts as a platform as a foot rest, comprises a steering, front blinkers and a handle bar assembly (1.5) with a head light, electrical controls and brake controls, a front shock absorber (1.7) and a front wheel (1.6).

5. The semi-monocoque structure as claimed in claim 1, wherein the clamping means (3.17) are metallic straps each having a cushion effect which is adapted to be provided between the CNG/LPG cylinder structure (3.15) and the strap.

6. The semi-monocoque structure as claimed in claim 1, wherein the holding means are a front cup (3.16F) having a cushion effect provided for the CNG/LPG cylinder (3.15), which is supported on parallel tubes (3.2) and rests on a front tube (3.5) joining the parallel tubes (3.2) and a rear cup (3.16R) for the CNG/LPG cylinder (3.15), which is supported over two rear parallel tubes (3.18) welded to a U tube (3.12), wherein a spacing of the two rear parallel tubes (3.18) is 85 to 100 mm for avoiding the interfering of a rear wheel in a full bump condition.

7. The semi-monocoque structure as claimed in claim 1, further comprising brackets (2.11, 3.11) for a rear shock absorber which are adapted to bear a reactive load of the shock without bending or deforming such that at no load vehicle conditions a shock absorber angle is 2° to 3° from a vertical plane towards front in case of a CNG/LPG vehicle.

8. The semi-monocoque structure as claimed in claim 1, wherein the "Y" shaped tubular structure is a single central tube (2.2) integrated by means of an interface bracket (2.1) to the front end (F) of the drive away assembly and later branching out into two parallel tubes (2.20).

9. The semi-monocoque structure as claimed in claim 8, wherein the interface bracket (2.1) is rigidly held across and inside a lower chassis (1.3) of the front end (F) of the drive away assembly, and the single central tube (2.2) along with three cross tubes (2.2.1) is welded to the interface bracket (2.1).

10. The semi-monocoque structure as claimed in claim 9, wherein the interface bracket (2.1) is welded across and inside the lower chassis (1.3) of the front end (F) of the drive away assembly.

11. The semi-monocoque structure as claimed in claim 1, wherein the parallel tubular frame structure comprises a pair of parallel tubes (3.2) welded to an interface bracket (3.1), providing support for mounting the shell assembly (4.1,4.2).

12. The semi-monocoque structure as claimed in claim 11, wherein the interface bracket (3.1) is rigidly held across and inside a lower chassis (1.3) of the front end (F) of the drive away assembly.

13. The semi-monocoque structure as claimed in claim 12, wherein the interface bracket (3.1) is welded across and inside the lower chassis (1.3) of the front end (F) of the drive away assembly.

## Patentansprüche

1. Halbschalenstruktur für ein Zweiradfahrzeug, umfassend eine tragende Antriebsbaugruppe, eine Schalenbaugruppe (4.1, 4.2) zum Bieten von Unterstützung für einen Fahrer und einen Beifahrersitz, der zur Antriebsbaugruppe zur Aufrechterhaltung der Kontinuität der Ästhetik des Fahrzeugs passt, ein Paar von verschließbaren Blechhauben (4.4, 4.5), die einem Motor und anderen Teilen eine Abdeckung und Sicherheit bieten, worin die Antriebsbaugruppe eine zweiteilige Baugruppe umfasst, die an ihrem Frontende (F) eine Blechstruktur und an ihrem rückwärtigen Ende (R) eine rohrförmige Struktur (2.10, 3.10) einer getrennten Verbindungsstelle aufweist, um einen Betätigungsstab des Haubenöffnungsmechanismus freizugeben und auch als Knotenblech zu funktionieren, wobei die genannte rohrförmige Struktur (2.10, 3.10) entweder "Y"-förmig ausgestaltet ist oder eine parallele Rohrrahmenstruktur aufweist, und die genannte rohrförmige Struktur (2.10, 3.10) mit Haltemitteln (3.16F, 3.16R) an ihrem Frontende und an ihrem rückwärtigen Ende versehen ist, um einen CNG/LPG-Zylinder (3.15) zu halten, welche eine Abmessung aufweisen, die mit den Abmessungen, Form und Gestaltung des CNG/LPG-Zylinders (3.15) übereinstimmt, und Spannmittel (3.17) aufweist, um den CNG/LPG-Zylinder (3.15) starr zu spannen.

2. Halbschalenstruktur nach Anspruch 1, worin das Frontende (F) der Antriebsbaugruppe vier Hauptteile umfasst: ein Lenkrohr (1.1), ein oberes Fahrgestell (1.2), ein unteres Fahrgestell (1.3) und eine Windschutzscheibe (1.4).

3. Halbschalenstruktur nach Anspruch 2, worin das Frontende (F) der Antriebsbaugruppe hauptsächlich aus Metallblech besteht, ausgestaltet in der Form einer Rinne- und-Balken-Gestaltung, und ein Strukturelement zum Bieten von Beugungs- und Torsionsfestigkeit ist, um als ein Mittel zum Bieten von Festpunkten für den Motor zu dienen.

4. Halbschalenstruktur nach Anspruch 2, worin das Frontende (F) der Antriebsbaugruppe als Beinschützer und als Schutz vor Wind und Schmutz, als eine Plattform als Fußauflage dient, eine Lenkung, Frontblinker und eine Lenkstangebaugruppe (1.5) mit einem Vorderlicht, elektrische Steuerungen und Bremsensteuerungen, einen Vorderstoßdämpfer (1.7) und ein Vorderrad (1.6) umfasst.

5. Halbschalenstruktur nach Anspruch 1, worin die Spannmittel (3.17) metallische Riemen sind, die jeweils eine Pufferwirkung aufweisen, die geeignet ist, zwischen der CNG/LPG-Zylinderstruktur (3.15) und dem Riemen geliefert zu werden.

6. Halbschalenstruktur nach Anspruch 1, worin die Haltemittel eine Frontschale (3.16F) mit einer für den CNG/LPG-Zylinder (3.15) bestimmten Pufferwirkung, welche auf parallelen Rohren (3.2) abgestützt ist und auf einem Frontrohr (3.5) liegt, das die parallelen Rohre (3.2) verbindet, und eine Rückschale (3.16R) für den CNG/LPG-Zylinder (3.15) sind, die über zwei rückwärtigen parallelen, an einem U-förmigen Rohr (3.12) geschweißten, Rohren (3.18) abgestützt ist, worin ein Abstand der beiden rückwärtigen parallelen Rohre (3.18) 85 bis 100 mm beträgt, um eine Interferenz eines Hinterrades in einem voll abgedämpften Zustand zu vermeiden.

7. Halbschalenstruktur nach Anspruch 1, welche ferner Bügel (2.11, 3.11) für einen Hinterstoßdämpfer umfasst, die geeignet sind, eine reaktive Last des Stoßes ohne Biegung oder Verformung zu tragen, so dass unter Fahrzeugzuständen ohne Last ein Stoßdämpferwinkel 2° bis 3° von einer vertikalen Ebene nach vorne im Falle eines CNG/LPG-Fahrzeugs beträgt.

8. Halbschalenstruktur nach Anspruch 1, worin die "Y"-förmige rohrförmige Struktur ein einziges Zentralrohr (2.2) ist, das mittels eines Verbindungsbügels (2.1) am Frontende (F) der Antriebsbaugruppe integriert ist und sich dann in zwei parallele Rohre (2.20) verzweigt.

9. Halbschalenstruktur nach Anspruch 8, worin der Verbindungsbügel (2.1) durch und innerhalb eines unteren Fahrgestells (1.3) des Frontendes der Antriebsbaugruppe starr gehalten ist, und das einzige Zentralrohr (2.2) zusammen mit drei Querrohren (2.2.1) an dem Verbindungsbügel (2.1) geschweißt ist.

10. Halbschalenstruktur nach Anspruch 9, worin der Verbindungsbügel (2.1) durch und innerhalb des unteren Fahrgestells (1.3) des Frontendes der Antriebsbaugruppe geschweißt ist.

11. Halbschalenstruktur nach Anspruch 1, worin die parallele Rohrrahmenstruktur ein Paar parallele Rohre (3.2) umfasst, die an einem Verbindungsbügel (3.1) geschweißt sind und Unterstützung für die Montage der Schalenbaugruppe (4.1, 4.2) liefern.

12. Halbschalenstruktur nach Anspruch 11, worin der Verbindungsbügel (3.1) durch und innerhalb eines unteren Fahrgestells (1.3) des Frontendes der Antriebsbaugruppe starr gehalten ist.

13. Halbschalenstruktur nach Anspruch 12, worin der Verbindungsbügel (3.1) durch und innerhalb des unteren Fahrgestells (1.3) des Frontendes der Antriebsbaugruppe geschweißt ist.

## Revendications

1. Structure semi-monocoque pour un véhicule à deux roues comprenant un ensemble de d'entraînement porteur, un ensemble coque (4.1, 4.2) pour assurer un support à la selle du conducteur et du passager arrière, correspondant à l'ensemble de d'entraînement et assurant la continuité esthétique du véhicule, une paire de protections verrouillables en tôle (4.4, 4.5) qui couvrent et assurent la sécurité d'un moteur et d'autres pièces, dans laquelle l'ensemble d'entraînement comprend un ensemble à deux pièces, ayant à son extrémité avant (F) une construction en tôle et à son extrémité arrière (R) une structure tubulaire (2.10, 3.10) d'un joint fendu, pour libérer une tige d'actionnement d'un mécanisme d'ouverture des protections, ladite structure tubulaire (2.10, 3.10) a une forme en "Y" ou une structure de cadre à tuyaux parallèles, ladite structure à tuyaux parallèles (2.10, 3.10) est pourvue de moyens de retenue (3.16F, 3.16R) à son extrémité avant et à sono extrémité arrière pour retenir une bouteille de gaz naturel/GPL (3.15) ayant une dimension conforme aux dimensions, à la forme et à la configuration de la bouteille de gaz naturel/GPL (3.15) et comporte des moyens de serrage (3.17) pour serrer rigidement la bouteille de gaz naturel/GPL (3.15).

2. Structure semi-monocoque selon la revendication 1, dans laquelle l'extrémité avant (F) de l'ensemble d'entraînement comprend quatre pièces principales: un tube de direction (1.1), un châssis de dessus (1.2), un châssis de dessous (1.3) et un pare-brise (1.4).

3. Structure semi-monocoque selon la revendication 2, dans laquelle l'extrémité avant (F) de l'ensemble d'entraînement est principalement réalisé en tôle, en configuration de profilés en U et poutres, et constitue une partie structurelle apte à assurer un soutien et une résistance à la torsion pour réaliser un moyen apte à fournir des points d'ancrage pour le moteur.

4. Structure semi-monocoque selon la revendication 2, dans laquelle l'extrémité avant (F) de l'ensemble d'entraînement a la fonction de pare-jambes et de protection contre le vent et la boue, ainsi que d'une plateforme repose-pieds, comprend un système de direction, des clignotants avant et un ensemble guidon (1.5) comportant un phare avant, des commandes électriques et des commandes de frein, un amortisseur avant (1.7) et une roue avant (1.6).

5. Structure semi-monocoque selon la revendication 1, dans laquelle les moyens de serrage (3.17) comportent des colliers métalliques ayant un effet d'amortissement apte à être prévu entre la structure de bouteille de gaz naturel/GPL (3.15) et le collier.

6. Structure semi-monocoque selon la revendication 1, dans laquelle les moyens de
retenue sont une coupe avant (3.16F) ayant un effet d'amortissement prévu pour la bouteille de gaz naturel/GPL (3.15), qui est supportée sur des tuyaux parallèles (3.2) et une coupe arrière (3.16R) pour le bouteille de gaz naturel/GPL (3.15) qui est supportée sur deux tuyaux parallèles arrière (3.18) soudés à un tuyau en U (3.12), dans laquelle une distances entre les deux tuyaux parallèles arrière (3.18) est comprise entre 85 et 100 mm pour éviter toute interférence de la roue arrière dans une condition d'amortissement maximum.

7. Structure semi-monocoque selon la revendication 1, comprenant par ailleurs des brides (2.11, 3.11) pour un amortisseur arrière qui sont aptes à soutenir une charge de réaction au choc sans fléchir ou se déformer, de manière qu'en condition d'absence de charge sur le véhicule, l'angle d'amortisseur est compris entre 2° et 3° par rapport à un plan vertical vers le côté avant d'un véhicule à gaz naturel/GPL.

8. Structure semi-monocoque selon la revendication 2, dans laquelle la structure tubulaire en "Y" est un tuyau central unique (2.2) intégré au moyen d'une interface bride (2.1) à l'extrémité avant (F) de l'ensemble d'entraînement qui se ramifie en suite en deux tuyau parallèles.

9. Structure semi-monocoque selon la revendication 8, dans laquelle la bride d'interface (2.1) est retenue rigidement transversalement à l'intérieur d'un châssis de dessous (1.3) de l'extrémité avant (F) de l'ensemble d'entraînement, et le tuyau central unique (2.2) avec trois tuyaux transversaux (2.2.1) est soudé à la bride d'interface (2.1).

10. Structure semi-monocoque selon la revendication 9, dans laquelle la bride d'interface (2.1) est soudée transversalement à l'intérieur du châssis de dessous (1.3) de l'extrémité avant (F) de l'ensemble d'entraînement.

11. Structure semi-monocoque selon la revendication 1, dans laquelle la structure de cadre à tuyaux parallèles comprend une paire de tuyaux parallèles (3.2) soudés à une bride d'interface (3.1) pour fournir un support de montage à l'ensemble coque (4.1, 4.2)

12. Structure semi-monocoque selon la revendication 11, dans laquelle la bride d'interface (3.1) est rigidement retenue transversalement à l'intérieur du châssis de dessous (1.3) de l'extrémité avant (F) de l'ensemble d'entraînement.

13. Structure semi-monocoque selon la revendication 12, dans laquelle la bride d'interface (3.1) est soudée transversalement à l'intérieur du châssis de dessous (1.3) de l'extrémité avant (F) de l'ensemble d'entraînement.
